# EUROPÄISCHE PATENTSCHRIFT

(11) **EP 1 072 395 B1**
(45) Veröffentlichungstag und Bekanntmachung des Hinweises auf die Patenterteilung: **05.03.2003**
(21) Anmeldenummer: 00114621.6
(22) Anmeldetag: 07.07.2000
(51) Int. Cl.: B29D 30/42

(54) **Verfahren zum Zusammensetzen der Enden von Materialbahnen**
Method for joining reinforced elastomeric sheet material
Procédé de raccordement de bords en caoutchouc

(30) Priorität: 29.07.1999 DE 19935627
(43) Veröffentlichungstag der Anmeldung: 31.01.2001
(73) Patentinhaber: Continental Aktiengesellschaft, 30165 Hannover (DE)
(72) Erfinder: Fidan, Mehmet Sadettin, 30827 Garbsen (DE); Pollak, Burkhard, Dr., 77815 Bühl Baden (DE)

(56) Entgegenhaltungen:
- EP-A- 0 406 821
- EP-A- 0 498 215
- EP-A- 0 744 279
- DE-A- 1 579 213
- US-A- 5 293 795
- US-A- 5 437 751

## Beschreibung

Die Erfindung betrifft Verfahren zum Zusammensetzen der Enden einer Materialbahn, bei der im wesentlichen parallel zueinander und quer zur Längsrichtung der Materialbahn verlaufende Festigkeitsträger in einer Kautschukmischung eingebettet sind, insbesondere für die Herstellung von Reifenkarkassen.

Festigkeitsträger werden in Kautschukmischungen eingebettet, indem eine Schar von im wesentlichen parallel liegenden Cordfäden in Längsrichtung einen Kalander zur Ummantelung mit einer Kautschukmischung durchläuft Um anschließend Materialbahnen zu erzeugen, deren Festigkeitsträger nicht im wesentlichen in Längsrichtung der Materialbahn, sondern quer zu ihr verlaufen, wird die Ausgangsbahn senkrecht zur Längsrichtung geschnitten und die einzelnen Abschnitte unter geringfügiger Überlappung entsprechend zu längeren Bahnen meist maschinell zusammengesetzt. Derartige Materialbahnen finden zum Beispiel als Reifenkarkassen Verwendung. Dabei handelt es sich vorwiegend, insbesondere bei der PKW-Reifenherstellung, um in Kautschuk eingebettete textile Festigkeitsträger wie z. B. Rayon, Polyester, Nylon oder Aramid. So wird im Verlauf der Fahrzeugluftreifenherstellung ein Abschnitt der Bahn aus in Kautschuk eingebetteten Festigkeitsträgern um die Reifenaufbautrommel gewickelt. Der Abschnitt weist eine solche Länge auf, daß er einmal um die Trommel reicht und die Enden zur Sicherstellung einer geschlossenen Schicht auch nach Konfektionierung und Vulkanisation ebenfalls überlappend angeordnet sind. Die einzelnen Materialbahnen überlappen für einen sichere Verarbeitung 3 bis 5 mm.

In den genannten Überlappungsbereichen liegt eine Verdopplung der Materialstärke vor und die Dichte der Festigkeitsträger ist doppelt so hoch wie in den anderen Bereichen der Karkasse. Hieraus ergeben sich unterschiedliche Konsequenzen bei der anschließenden Vulkanisation, dem Aufpumpen und dem Betrieb der Reifen. Zunächst treten im Überlappungsbereich bei der Vulkanisation höhere Schrumpfkräfte durch die Erwärmung der verwendeten Kunststoffasem auf, nach dem Entfernen aus der Vulkanisationsform schrumpft dann der Überlappungsbereich stärker zusammen als das umgebende Material. Außerdem erfährt der Überlappungsbereich beim Aufpumpen des Reifens durch seine höhere Zugfestigkeit (Modul) im Vergleich zur übrigen Karkasseinlage eine geringere Dehnung und schließlich weist der Überlappungsbereich eine anderes Zeitdehnungsverhalten auf, ändert seine Länge in Abhängigkeit von der Zeit unter konstanter Krafteinwirkung also weniger stark als der übrige Bereich der Karkasse. Als Folge dieser drei Effekte treten beim mit Luft gefüllten Reifen Verstrammungen, Einschnürungen und dergleichen auf. Es ergibt sich eine etwas verschlechterte Uniformity und die Einschnürungen, die besonders als Schönheitsfehler im Seitenwandbereich sichtbar sind, werden vom Laien häufig als Riß in der Karkasse gedeutet und beim Reifen- oder Fahrzeughersteller reklamiert.

Zur Vermeidung der Einschnürungen im Seitenwandbereich des Reifens sind bereits unterschiedliche Vorschläge gemacht worden. So ist beispielsweise aus der EP 0406 821 B1 bekannt die Dichte der Verstärkungsglieder in den Endteilen einer Reifenkarkasse, die später überlappen, dadurch zu verringern, daß der entsprechende Bereich des Karkassmaterials über einer Vertiefung eingespannt wird und ein keilförmiges, mit der Vertiefung nahezu formschlüssiges Prägewerkzeug das elastomere bahnenförmige Karkassmaterial durch Niederdrücken in den Hohlraum derart (visko)elastisch verformt und verlängert, daß die Fadendichte ungefähr halbiert wird. In der Spitze der Vertiefung wird die Materialbahn mittig geschnitten und die so entstandenen Endteile der Reifenkarkasse werden überlappend beim Reifenaufbau angeordnet, bevor die Enden in ihre Ausgangslage vor der Verformung zurückgekehrt sind.

Aus der US 5,240,534 sind ebenfalls eine Vorrichtung und ein Verfahren zum Zusammensetzen von elastomeren Materialbahnen bekannt. In diesem Fall wird vorgeschlagen, die bereits geschnittenen Enden der Karkasse überlappend über einer U- oder V-förmigen Vertiefung anzuordnen und mit einem beweglichen Werkzeug das elastomere Material in die Vertiefung niederzudrücken. Auf diese Weise wird der Abstand zwischen benachbarten Festigkeitsträgern vergrößert und sie kommen letztendlich zwischen den Festigkeitsträgern des anderen Endes zum Liegen.

Da bei den beiden genannten Verfahren die Materialbahn in eine Vertiefung gedrückt wird, entstehen Knicke an den Stellen, an denen die Materialbahn aus der ursprünglichen Ebene heraus umgelenkt wird. An solchen Knicken ergeben sich höhere Spannungskonzentrationen als im umgebenden Material, die sich nachteilig in Produkten auswirken können. Außerdem besitzt das elastomere Material ein gewisses Formgedächtnis, so daß Knicke sich nicht vollständig zurückbilden und es zu Kavernenbildung im Produkt kommen kann.
Da die elastomere Materialbahn, die eine gewisse Klebrigkeit besitzt, an den Berührungspunkten mit den Wänden der Vertiefung und dem Verformungswerkzeug der Haftreibung unterliegt und die einzelnen Abschnitte der Materialbahn zu unterschiedlichen Zeiten mit Wänden und Werkzeug in Berührung kommen, können Ungleichmäßigkeiten in der Materialverteilung auftreten. Es kann dazu kommen, daß die Materialbahn in den Abschnitten, die später mit einer Wandung in Berührung kommen, stärker gedehnt wird als in der Nähe von Knicken.

Aus der US 5,437,751 und der EP 0 744 279 A2 sind Verfahren zum Verformen von Kautschukmischungsbahnen, die keine Festigkeitsträger enthalten und später mit den Enden überlappend angeordnet werden sollen, bekannt. Die Enden der Kautschukbahnen werden für gute und gleichmäßige Überlappungsbereiche gepreßt oder gestreckt.

In der US 5,437,751 ist ein Verfahren zur Vermeidung von Seitenwandeinschnürungen bekannt, bei dem ein zusätzlicher Kissenstreifen aus einer Kautschukmischung auf den Überlappungsbereich zwischen Karkasse und Kern aufgebracht wird.

Der vorliegenden Erfindung liegt nun die Aufgabe zugrunde, ein Verfahren zum Zusammensetzen der Enden einer Materialbahn bereitzustellen, durch das die Nachteile, die durch eine erhöhte Festigkeitsträgerdichte in Überlappungsbereichen hervorgerufen werden, einfach und wirksam vermindert werden können, und bei dem Knicke und ungleichmäßige Materialverteilungen in der zur Überlappung verwendeten Festigkeitsträger enthaltenden Materialbahn beim Verformen vermieden werden können.

Gemäß den Merkmalen des Anspruchs 1 wird die gestellte Aufgabe gelöst durch ein Verfahren, bei dem zumindest eines der für eine Überlappung vorgesehenen Enden einer Materialbahn einer plastischen Verformung, die mit einer Längenzunahme verbunden ist, unterworfen wird, wobei die Fadendichte der Festigkeitsträger in der Ebene der Materialbahn in dem für eine Überlappung vorgesehenen Bereich reduziert wird, und bei dem die Verformung im wesentlichen in der Ebene der Materialbahn, d. h. in der von der Materialbahn außerhalb des Verformungsbereiches aufgespannten Ebene, vorgenommen wird.

Der Grundgedanke der Erfindung ist darin zu sehen, daß eine Verringerung der Fadendichte der Festigkeitsträger in den für eine Überlappung vorgesehenen Enden den Nachteilen, die durch eine herkömmliche Überlappung resultieren würden, wie z. B. Verstrammungen oder Einschnürungen in den Produkten, entgegenwirkt. Die Verringerung der Fadendichte erfolgt durch plastisches Verformen, dabei fließt die unvulkanisierte Kautschukmischung, in die die Festigkeitsträger eingebettet sind, unter Einwirkung äußerer Kräfte zwischen die einzelnen Fäden. Da die plastische Verformung im wesentlichen in der Ebene der Materialbahn vorgenommen wird, kann vorteilhafterweise vermieden werden, daß Ungleichmäßigkeiten in der Materialverteilung und Materialbeanspruchung im verformten Bereich, wie sie sich bei Umlenk- oder Knickverfahren zeigen können, auftreten. Außerdem treten beim Verformen in der Ebene der Materialbahn keine Knicke oder Bögen im Material auf, die aufgrund des Formgedächtnisses des Materials zu Kavernenbildung im Produkt führen könnten.

Eine vorteilhafte Ausführungsform der Erfindung besteht darin, daß gemäß Anspruch 2 beide für eine Überlappung vorgesehenen Enden der Verformung in der Ebene der Materialbahn unterworfen werden. Auf diese Weise können die Nachteile, die sich aus doppelter Festigkeitsträgerdichte in Überlappungsbereichen ergeben, noch effektiver vermindert werden.

Gemäß einer Weiterbildung des Verfahrens nach Anspruch 3 wird zumindest ein Ende der Materialbahn in der Längsrichtung in ein Druckwerkzeug bis zur Hälfte der Druckwerkzeugbreite eingefügt, dann erfolgt ein Zusammendrücken und durch diesen Druckvorgang erfolgt senkrecht zur Ebene der Materialbahn die plastische Verformung in der Ebene der Materialbahn unter gleichzeitiger Verringerung der Fadendichte der Festigkeitsträger. Anschließend werden derart hergestellte Bereiche für die Überlappung beim Zusammensetzen verwendet. Mit diesem Verfahren bietet sich die Möglichkeit mit einem einfach gestalteten Druckwerkzeug die Auswirkungen bei Überlappung von Materialbahnen in positiver Hinsicht zu beeinflussen. Dieses Verfahren liegt besonders dann nahe, wenn die Materialbahnen bereits in geschnittener, paßgerechter Form vorliegen.

Gleichwirkend ist ein Verfahren gemäß Anspruch 4, bei dem die Materialbahn vor dem Schneidvorgang mit dem für ein späteres Zusammensetzen vorgesehenen Bereich in ein Druckwerkzeug eingefügt wird, dann ein Zusammendrücken erfolgt, und daß durch diesen Druckvorgang senkrecht zur Ebene der Materialbahn die plastische Verformung in der Ebene der Materialbahn unter gleichzeitiger Verringerung der Fadendichte der Festigkeitsträger erfolgt. Die Materialbahn wird bei dieser Verfahrensvariante erst nach der Druckvorgang in der Mitte des verformten Bereiches geschnitten und die so entstandenen verformten Enden anschließend zum Zusammensetzen überlappend angeordnet. Dieses Verfahren bietet den Vorteil, daß die Fadendichte mit nur einem Werkzeug und einem Arbeitsschritt an beiden Enden der Materialbahn gleichzeitig verringert werden kann.

Eine andere Weiterbildung des Verfahrens nach Anspruch 5 stellt die überlappende Anordnung der Enden der Materialbahn auf einer harten Unterlage dar, die vorab getätigt wird, und bei der anschließend die plastische Verformung im Überlappungsbereich durch eine Druckbeaufschlagung mittels einer bewegten Rolle erfolgt. Diese Variante hat den Vorzug, daß sie nahezu unabhängig vom Ort sehr einfach und zeitsparend eingesetzt und ausgeführt werden kann, da die bewegte Rolle einfach transportiert werden kann und an keine speziellen Halterungen oder anderen Gerätschaften gebunden ist. So kann dieses Verfahren z. B. für eine Reifenkarkasse direkt an einer Reifenaufbautrommel eingesetzt werden.

Werden als Festigkeitsträger Materialien verwendet, die eine geringe radiale Kompressibilität besitzen, wie z. B. Polyester, begrenzt der Durchmesser des Festigkeitsträgerfadens das Ausmaß der plastischen Verformung, da die Materialbahn dann nur bis zu einem bestimmten Grad zusammengedrückt werden kann. Um die Fadendichte auch in so einem Fall ausreichend zu erniedrigen, hat es sich als vorteilhaft erwiesen, einen dünnen Kautschukstreifen vor der plastischen Verformung auf zumindest ein Ende der Materialbahn zu legen, so daß das Ende zumindest teilweise von diesem bedeckt ist, und diesen Kautschukstreifen gleichzeitig mit dem Ende der Materialbahn plastisch zu verformen. Durch diesen Kautschukstreifen wird zusätzliches Material zur Verfügung gestellt, welches zwischen die einzelnen Festigkeitsträgerfäden fließen kann.

Ein weiteres gleichwirkendes Verfahren stellt die Variante gemäß des Anspruchs 7 dar, bei der die Materialbahn vor dem Schneidvorgang durch Strecken ohne jegliches Drücken plastisch verformt wird und anschließend der Bereich in der Mitte geschnitten wird und die gestreckten Enden zum Zusammensetzen überlappend angeordnet werden. Zum Strecken kann dabei die Materialbahn beispielsweise einfach zwischen Klammern leicht eingeklemmt und auseinandergezogen werden.

Für alle genannten Verfahren hat es sich als vorteilhaft erwiesen, die plastische Verformung bei 50 bis 120 °C, vorzugsweise bei 60 bis 80 °C, vorzunehmen, denn bei erhöhter Temperatur sinkt die Viskosität des Kautschuks und die elastischen Rückstellkräfte des verformten Kautschuks werden verringert, so daß die Verformung mit weniger Kraftaufwand erfolgen kann und sich die Verformung nicht so stark und schnell durch die elastischen Eigenschaften des Kautschuks zurückbildet. Die erhöhten Temperaturen können dabei durch erwärmte Druckwerkzeuge und Rollen und/oder durch Vorwärmung des zu verformenden Bereiches erzielt werden.

Um die Nachteile wie Verstrammung oder Einschnürungen am fertigen Produkt möglichst wirkungsvoll zu vermindern, hat es sich als sinnvoll erwiesen, daß die Fadendichte der Festigkeitsträger im Bereich der für eine Überlappung vorgesehenen Enden der Materialbahn durch die plastische Verformung auf ca. die Hälfte der ursprünglichen Fadendichte reduziert wird. Dadurch kann erreicht werden, daß beim Überlappen zweier derart verformter Enden die sich dort ergebende additive Fadendichte der Festigkeitsträger ungefähr der Fadendichte des umgebenden nicht verformten Materials entspricht. Somit verhält sich dieser Überlappungsbereich bei der folgenden Verarbeitung und Nutzung z. B. hinsichtlich der Vulkanisation nahezu wie die restlichen Bereiche der Materialbahn, so daß z. B. Verstrammungen, Einschnürungen in Seitenwänden von Fahrzeugreifen und damit verbundene Uniformity-Probleme weitgehend vermieden werden können.

Die Aufgabe wird gelöst durch ein Verfahren gemäß Anspruch 10, bei dem zumindest eines der für eine Überlappung vorgesehenen Enden der Materialbahn einer plastischen Verformung, die mit einer Längenzunahme und außerdem mit einer Materialdickenreduzierung zum Schnittende hin verbunden ist, unterworfen wird, wobei die Fadendichte der Festigkeitsträger (3) in dem für eine Überlappung vorgesehenen Bereich bis zum Schnittende der Materialbahn hin reduziert wird, und daß die Verformung im wesentlichen in der Ebene der Materialbahn (1) vorgenommen wird. Vorteilhaft ist, wenn beide Enden plastisch verformt werden.

Bei diesem Verfahren macht man sich zu nutze, daß man die Festigkeitsträgerdichte in einem Überlappungsbereich verringern kann, indem man die für die Überlappung vorgesehenen Enden einer Materialbahn zum Schnittende hin möglichst kontinuierlich in ihrer Materialdicke unter Einwirkung äußerer Kräfte reduziert, und derart plastisch verformte Enden übereinanderlegt. Im Verlauf der plastischen Verformung entstehen dabei nahezu keilförmige Enden, in denen die Festigkeitsträgerdichte zum Schittende hin möglichst stetig verringert ist.

Gemäß einer vorteilhaften Weiterbildung wird auch bei diesem Verfahren die plastische Verformung bei Temperaturen von 50 bis 120 °C, vorzugsweise bei 60 bis 80 °C, vorgenommen, da, wie bereits erwähnt, bei den höheren Temperaturen die Viskosität des Kautschuks sinkt und die elastischen Rückstellkräfte des verformten Kautschuks verringert werden, so daß die Verformung einfacher und effektiver durchgeführt werden kann.

Werden die nach den beschriebenen Verfahren zusammengesetzten Matrerialbahnen für die Herstellung von Fahrzeugluftreifen verwendet, können die vom Benutzer des Reifens häufig als negativ empfundenen Seitenwandeinschnürungen im Reifen wirkungsvoll vermindert oder sogar gänzlich beseitigt werden.

Ausführungsbeispiele und weitere Vorteile der vorliegenden Erfindung werden im Zusammenhang mit den nachstehenden Figuren näher erläutert, ohne daß die Erfindung jedoch auf diese Beispiele beschränkt ist.
- Fig. 1: zeigt schematisch ein Verformen von bereits geschnittenen Enden einer Materialbahn durch einen Druckvorgang.
- Fig. 2: zeigt schematisch ein Verformen eines für eine Überlappung vorgesehenen Bereiches einer Materialbahn durch einen Druckvorgang.
- Fig. 3: zeigt schematisch ein Verformen eines Überlappungsbereiches einer Materialbahn mit einer bewegten Rolle.
- Fig. 4: zeigt schematisch ein Verformen eines für eine Überlappung vorgesehenen Bereiches einer Materialbahn durch einen Streckvorgang.
- Fig. 5a: zeigt schematisch einen konventionellen Überlappungsbereich einer Reifenkarkasse vor und nach Beaufschlagung des Reifens mit Druckluft.
- Fig. 5b: zeigt schematisch einen plastisch verformten Überlappungsbereich einer Reifenkarkasse vor und nach Beaufschlagung des Reifens mit Druckluft.
- Fig. 6 und 7: zeigen schematisch ein Verformen eines für eine Überlappung vorgesehenen Bereiches einer Materialbahn mit einer Materialdickenreduzierung zum Schnittende hin.
- Fig. 8: zeigt schematisch das Schneiden und Verformen eines für eine Überlappung vorgesehenen Bereiches einer Materialbahn mit einer Materialdickenreduzierung zum Schnittende hin.
- Fig. 9: zeigt schematisch den Überlappungsbereich zweier zum Schittende hin in der Materialdicke reduzierter Enden.

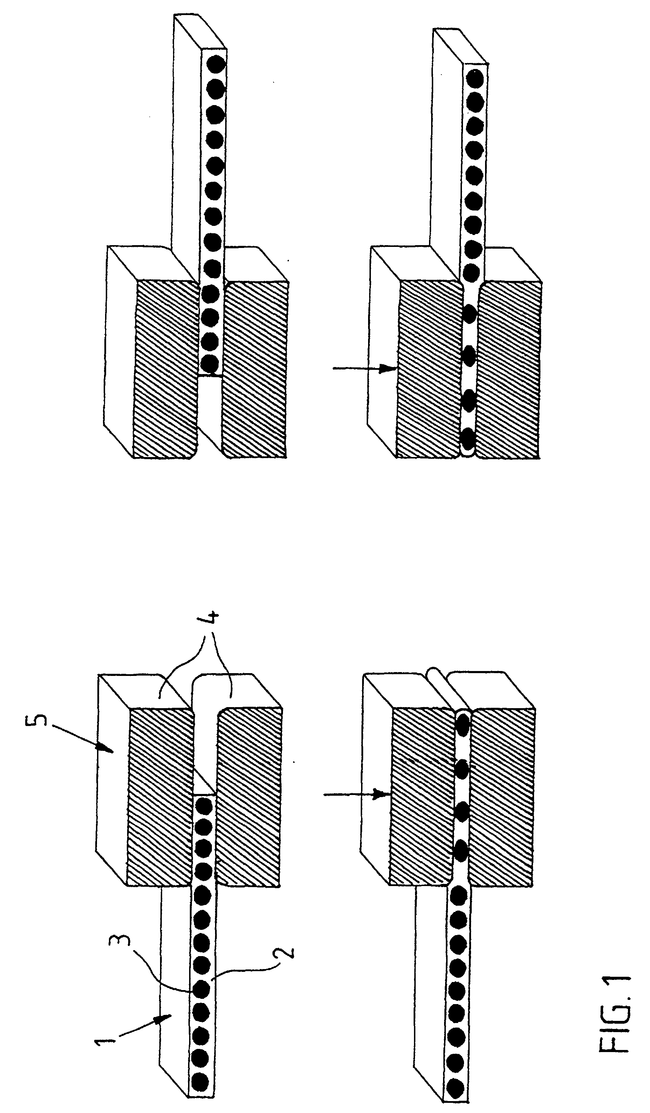

Bei dem in Fig. 1 dargestellten Verfahren werden die Enden einer bereits geschnittenen Materialbahn 1 aus in einer Kautschukmischung 2 eingebetteten Festigkeitsträgern 3 zum Verformen zwischen die Druckplatten 4 eines Druckwerkzeuges 5 gebracht. Dabei werden die Enden nur etwa bis zur Mitte der Druckplattenbreite eingefügt. Anschließend werden die gegebenenfalls auf 50 bis 120°C erwärmten Druckplatten 4 zusammengedrückt, so daß die Kautschukmischung 2 zwischen die Festigkeitsträger fließt und so die verformten Enden ungefähr die gesamte Breite der Druckplatten 4 einnehmen und damit der Abstand der Festigkeitsträger 3 sich nahezu verdoppelt hat. Auf diese Weise erhaltene Enden können im weiteren Verarbeitungsprozeß überlappend angeordnet werden und ergeben dann im fertigen Produkt im Überlappungsbereich eine Fadendichte der Festigkeitsträger 3, die etwa der der einlagigen, unverformten Materialbahn entspricht.

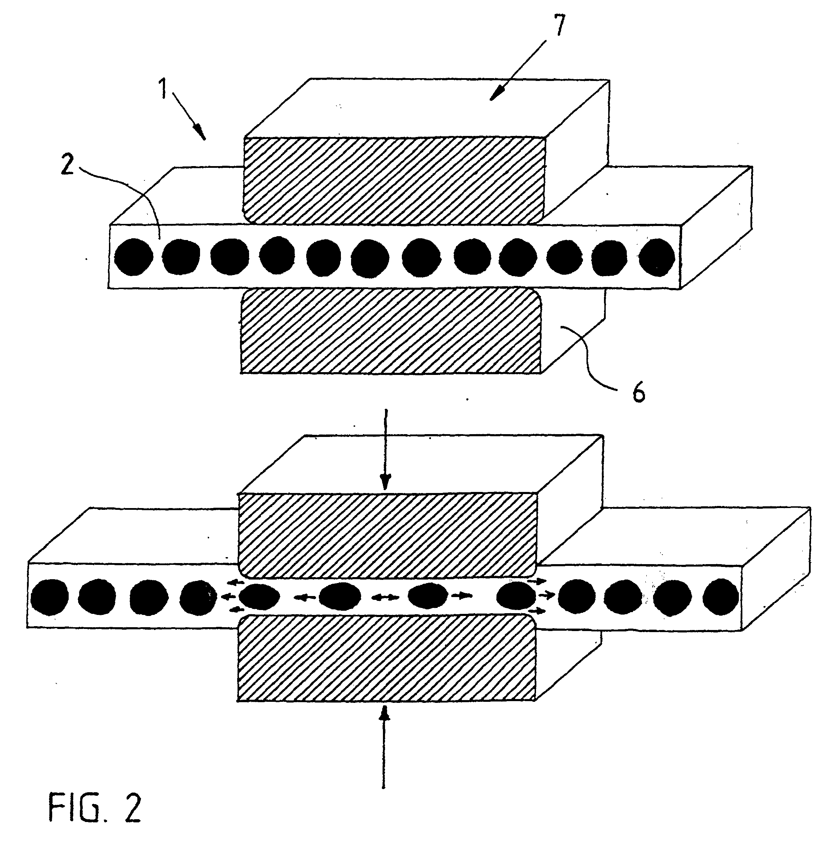

In Fig. 2 ist ein gleichwirkendes Verfahren dargestellt, bei dem die ungeschnittene Materialbahn 1 mit dem für eine Überlappung vorgesehenen Bereich zwischen die im Vergleich mit den Druckplatten 4 in Fig. 1 etwas breiter ausgebildeten Druckplatten 6 eines Druckwerkzeuges 7 gebracht wird. Beim Zusammendrücken der Druckplatten 6 fließt die Kautschukmischung 2 zwischen die Festigkeitsträger 3 und letztere vergrößern zwischen innerhalb des Druckbereiches ihren Abstand zueinander. Die Druckplatten 6 können auch in diesem Fall zur Verringerung der Viskosität und der elastischen Rückstellkräfte auf Temperaturen zwischen 50 und 120°C erwärmt werden. Anschließend wird der Bereich mit der verringerten Fadendichte der Festigkeitsträger 3 mittig geschnitten und die Enden überlappend zusammengesetzt.

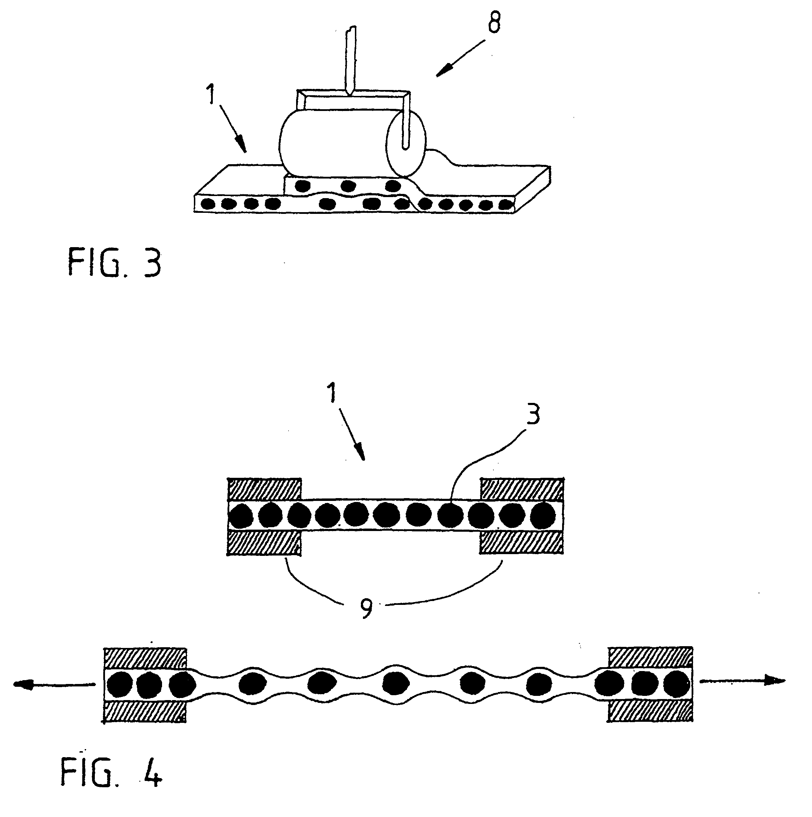

Sind die Enden einer Materialbahn 1 bereits überlappend auf einer harten Unterlage angeordnet kann wie in Fig. 3 dargestellt eine plastische Verformung der Enden derart vorgenommen werden, daß eine bewegte gegebenenfalls erwärmte Rolle 8 mit Druck über dem Überlappungsbereich hin und her bewegt wird. Befindet sich zwischen der harten Unterlage und dem Überlappungsbereich der Materialbahn 1 bereits eine zusätzliche Kautschuklage, wie es beispielsweise auf einer Karkassaufbautrommel für Fahrzeugluftreifen mit der Kautschukinnenschicht der Fall sein kann, ist darauf zu achten, daß durch den Druck mit der Rolle 8 die Innenschicht nicht beschädigt wird. Dies kann durch eine genaue Abstimmung von Temperatur und Druck der Rolle 8 erfolgen.

Fig. 4 stellt eine Variante des Verformens dar, bei der die Fadendichte der Festigkeitsträger 3 der Materialbahn 1 im für eine Überlappung vorgesehenen Bereichmit Hilfe eines Streckvorganges verringert wird. Klammern 9 umgreifen dabei den Bereich und ziehen ihn auseinander. Nach einer Streckung des Bereiches um 150 bis 200 % läßt man das Material entspannen, das heißt der elastische Verformungsanteil bildet sich zurück und nur die durch plastische Verformung erhaltene Längenänderung verbleibt. Die verbleibende Längenzunahme ist dabei abhängig von der verwendeten Kautschukmischung und sollte nach dem Entspannen ca. 100 % betragen. Anschließend erfolgt dann ein mittiges Schneiden des Bereiches mit ca. halbierter Fadendichte der Festigkeitsträger 3.

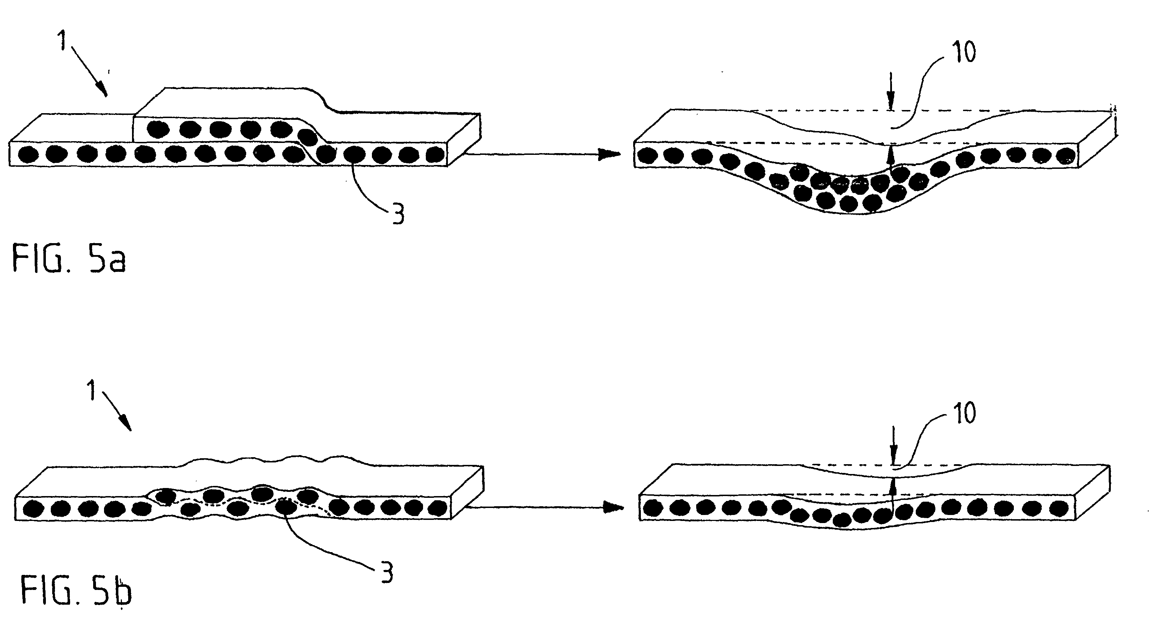

Die Figuren 5a und 5b verdeutlichen den Unterschied zwischen einem konventionell hergestellten Überlappungsbereich und einem Überlappungsbereich hergestellt nach dem erfindungsgemäßen Verfahren mit der plastischen Verformung bei Verwendung als Reifenkarkasse. Fig. 5a zeigt einen Überlappungsbereich bei dem die Enden einer Materialbahn 1 einfach ohne Verformung aufeinandergelegt sind. Man hat dort zwei Materiallagen übereinander und somit die doppelte Anzahl an Festigkeitsträgern pro Längeneinheit. Beaufschlagt man einen Reifen mit einem derartigen Überlappungsbereich in der Karkasse mit Druckluft, dehnt sich der Bereich mit der doppelten Festigkeitsträgerdichte weniger als das umgebende Material und es kommt zu Einschnürungen 10. In Fig. 5b dagegen sind die Enden der Materialbahn 1 im Überlappungsbereich plastisch verformt und die Fadendichte der Festigkeitsträger 3 ist deutlich geringer. Beim Aufpumpen eines Reifen mit einem solchen Überlappungsbereich in der Karkasse kommen die Festigkeitsträger 3 nahezu nebeneinander zum Liegen und die Fadendichte ist vergleichbar mit der des umgebenden Karkassmaterials. Das Ausmaß der Einschnürungen 10 wird dadurch viel geringer.

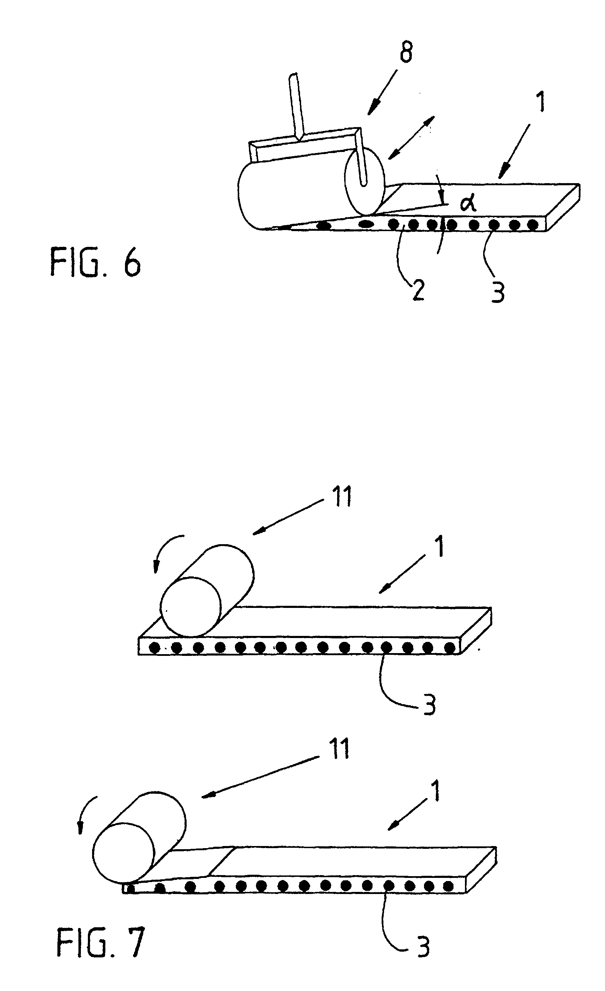

In den Figuren 6 bis 8 sind Ausführungsformen und die entsprechenden Werkzeuge für ein plastisches Verformen der für eine Überlappung vorgesehenen Enden einer Materialbahn 1 dargestellt, wobei die Verformung mit einer im wesentlichen stetigen Materialdickenreduzierung zum Schnittende hin verbunden ist. In Fig. 6 wird eine bewegte gegebenenfalls erwärmte Rolle 8 unter dem Winkel α auf das Ende der Materialbahn 1 gesetzt und unter Hin- und Herrollen parallel zu den Festigkeitsträgern 3 mit Druck wird das Ende spitz zulaufend verformt. Dabei verringert sich die Dichte der in die Kautschukmischung 2 eingebetteten Festigkeitsträger 3 zum Schnittende hin nahezu kontinuierlich. Die Materialbahn 1 kann dabei auf einer harten Unterlage befinden oder es wird von der anderen Seite mit einer Gegenwalze, die auch in einem Winkel zur anderen Seite der Materialbahn 1 angeordnet sein kann, der Gegendruck erzeugt.

Der gleiche Effekt eines sich zum Schnittende hin verjüngenden Endes einer Materialbahn 1 kann durch ein Auswalzen mit einer Rolle 11 erfolgen, die senkrecht zu den Festigkeitsträgern 3 mit zum Schnittende hin zunehmendem Druck bewegt wird. Das Prinzip ähnelt dem Ausrollen eines Teiges und ist in Fig. 7 dargestelt.

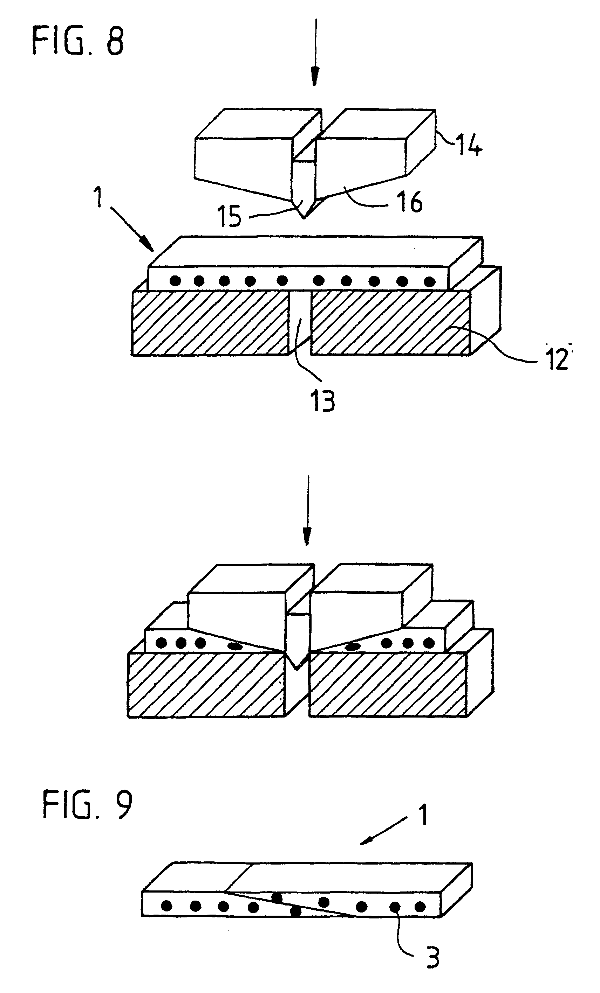

Fig. 8 zeigt, wie plastisch verformte Enden einer Materialbahn 1 mit einer Materialdickenreduzierung zum Schnittende hin gleich beim Schneiden der Materialbahn 1 erzeugt werden können. Die Materialbahn 1 wird dazu auf einer harten Unterlage 12 mit einem Schnittspalt 13 angeordnet und ein spezielles Schneidwerkzeug 14 mit einer scharfen Klinge 15 und daran befestigten gegenbenenfalls erwärmbaren, harten, glatten Seitenteilen 16, die nach oben abgewinkelt sind, fährt auf die Materialbahn 1 herunter, durchtrennt sie und verformt die Enden plastisch. Die beiden Vorgänge können auch zeitlich entkoppelt werden, indem die Klinge 15 zunächst aus dem Schneidwerkzeug hinab fährt und erst anschließend die Seitenteile 16 auf die Enden gedrückt werden.

In Fig. 9 ist dargestellt, wie zwei Enden einer Materialbahn 1, die unter stetiger Materialdickenreduzierung und Reduzierung der Dichte der Festigkeitsträger 3 zum Schnittende hin plastisch verformt wurden, passend überlappen. Die Materialdicke des Überlappungsbereiches entspricht dann an jeder Stelle ungefähr der Dicke des umgebenden Materials und die Dichte der Festigkeitsträger 3 ist im Überlappungsbereich durch die Überlagerung der beiden verformten Enden ungefähr genauso groß wie im umgebenden Material. Mit einem solchen Überlappungsbereich können die Nachteile, die bei herkömmlicher Überlappung in Produkten auftreten, vermieden werden.

In der Tabelle 1 sind einige Messungen von Seitenwandeinschnürungen an Reifen mit nach konventionellem und erfindungsgemäßem Verfahren gemäß Anspruch 1 überlappenden Reifenkarkassen aufgeführt. Für die Messungen mit Rayon als Festigkeitsträger in der Karkasslage wurden Reifen der Dimension 195/65 R 15 verwendet, für Polyester als Festigkeitsträger kamen Reifen der Dimension 125/90 R 15 zum Einsatz. Die Reifen mit Rayon als Festigkeitsträger wurden bei 50 °C und 80 % relativer Luftfeuchte und die Reifen mit Polyester als Festigkeitsträger bei Raumtemperatur und normaler Umgebungsfeuchte gealtert bzw. gelagert. Die Messungen der Seitenwandeinschnürungen wurden durchgeführt mit einer Höhen- und Seitenschlagmeßeinrichtung der Firma Hofmann mit zusätzlich angebrachten Rollen zur Abtastung der Seitenwandoberfläche.

**Tabelle 1**

| | **Karkassmaterial Rayon******* | | **Karkassmaterial Polyester******** | |
|---|---|---|---|---|
| **Seitenwandeinschnürungsmessung** | **SWI********* **konventionelle Überlappung** (mm) | **SWI********* **erfindungsgemäße Überlappung** (mm) | **SWI********* **konventionelle Überlappung** (mm) | **SWI********* **erfindungsgemäße Überlappung** (mm) |
| Erste Messung bei 2,5 bar Reifendruck | 0,31 | 0,09 | 0,43 | 0,16 |
| Messung nach 7 Tagen bei 2,5 bar Reifendruck | 0,84 | 0,31 | 0,99 | 0,27 |
| Erste Messung bei 4,0 bar Reifendruck | 0,46 | 0,15 | 0,76 | 0,29 |
| Messung nach 7 Tagen bei 4,0 bar Reifendruck | 0,97 | 0,34 | 1,04 | 0,31 |

| | | | | |
|---|---|---|---|---|
| *Alterung bei 50 °C, 80 % rel. Luftfeuchte | | | | |
| **Alterung bei Raumtemperatur und normaler Umgebungsluftfeuchte | | | | |
| ***SWI: engl. sidewall indentations, Seitenwandeinschnürungen in Fahrzeugreifen | | | | |

Wie aus der Tabelle 1 ersichtlich ist, können die Seitenwandeinschnürungen durch das erfindungsgemäße Verfahren deutlich reduziert werden und auch bei konstanter Krafteinwirkung über einen Zeitraum von sieben Tagen bleibt das Ausmaß der Seitenwandeinschnürungen geringer als beim nach herkömmlichen Verfahren hergestellten Reifen.

### Bezugszeichenliste

- 1: Materialbahn
- 2: Kautschukmischung
- 3: Festigkeitsträger
- 4: Druckplatten (schmal)
- 5: Druckwerkzeug 1
- 6: Druckplatten (breit)
- 7: Druckwerkzeug 2
- 8: Rolle, parallel zu Festigkeitsträgern bewegt
- 9: Klammem zum Strecken
- 10: Seitenwandeinschnürungen
- 11: Rolle, senkrecht zu Festigkeitsträgem bewegt
- 12: Unterlage
- 13: Schnittspalt
- 14: Schneidwerkzeug
- 15: Klinge
- 16: Seitenteile

## Patentansprüche

1. Verfahren zum Zusammensetzen der Enden einer Materialbahn (1), bei der im wesentlichen parallel zueinander und quer zur Längsrichtung der Materialbahn (1) verlaufende Festigkeitsträger (3) in einer Kautschukmischung (2) eingebettet sind, insbesondere für die Herstellung von Reifenkarkassen,
**dadurch gekennzeichnet, daß**
zumindest eines der für die Überlappung vorgesehenen Enden der Materialbahn (1) einer plastischen Verformung, die mit einer Längenzunahme verbunden ist, unterworfen wird, wobei die Fadendichte der Festigkeitsträger (3) in der Ebene der Materialbahn in dem für eine Überlappung vorgesehenen Bereich reduziert wird,
und daß die Verformung im wesentlichen in der Ebene der Materialbahn (1) vorgenommen wird.

2. Verfahren nach Anspruch 1, **dadurch gekennzeichnet, daß** beide für eine Überlappung vorgesehenen Enden der Verformung in der Ebene der Materialbahn (1) unterworfen werden.

3. Verfahren nach Anspruch 1 oder 2, **dadurch gekennzeichnet, daß** zumindest ein Ende der Materialbahn in der Längsrichtung in ein Druckwerkzeug (5) bis zur Hälfte der Druckwerkzeugbreite eingefügt wird, dann ein Zusammendrücken erfolgt, und daß durch diesen Druckvorgang senkrecht zur Ebene der Materialbahn (1) die plastische Verformung in der Ebene der Materialbahn (1) unter gleichzeitiger Verringerung der Fadendichte der Festigkeitsträger (3) erfolgt, und daß anschließend derart hergestellte Bereiche für die Überlappung beim Zusammensetzen verwendet werden.

4. Verfahren nach Anspruch 1 oder 2, **dadurch gekennzeichnet, daß** die Materialbahn vor dem Schneidvorgang mit dem für ein späteres Zusammensetzen vorgesehenen Bereich in ein Druckwerkzeug (7) eingefügt wird, dann ein Zusammendrücken erfolgt, und daß durch diesen Druckvorgang senkrecht zur Ebene der Materialbahn (1) die plastische Verformung in der Ebene der Materialbahn (1) unter gleichzeitiger Verringerung der Fadendichte der Festigkeitsträger (3) erfolgt und anschließend die Materialbahn (1) in der Mitte des verformten Bereiches geschnitten wird und die so entstandenen verformten Enden zum Zusammensetzen überlappend angeordnet werden.

5. Verfahren nach Anspruch 2, **dadurch gekennzeichnet, daß** die Enden der Materialbahn (1) vorab überlappend auf einem harten Unterlage angeordnet werden und daß danach die plastische Verformung im Überlappungsbereich durch eine Druckbeaufschlagung mittels einer bewegten Rolle (8) erfolgt.

6. Verfahren nach zumindest einem der vorhergehenden Ansprüche, **dadurch gekennzeichnet, daß** ein dünner Kautschukstreifen vor der plastischen Verformung auf zumindest ein Ende der Materialbahn (1) gelegt wird und das Ende zumindest teilweise von diesem bedeckt ist, und daß dieser Kautschukstreifen gleichzeitig mit dem Ende der Materialbahn (1) plastisch verformt wird.

7. Verfahren nach Anspruch 1 oder 2, **dadurch gekennzeichnet, daß** die Materialbahn (1) vor dem Schneidvorgang durch Strecken (9) ohne jegliches Drücken plastisch verformt wird und anschließend der Bereich in der Mitte geschnitten wird und die gestreckten Enden zum Zusammensetzen überlappend angeordnet werden.

8. Verfahren nach zumindest einem der vorhergehenden Ansprüche, **dadurch gekennzeichnet, daß** die plastische Verformung bei Temperaturen von 50 bis 120 °C, vorzugsweise 60 bis 80 °C, vorgenommen wird.

9. Verfahren nach zumindest einem der vorhergehenden Ansprüche **dadurch gekennzeichnet, daß** die Fadendichte der Festigkeitsträger (3) im Bereich der für eine Überlappung vorgesehenen Enden der Materialbahn (1) durch die plastische Verformung auf ca. die Hälfte der ursprünglichen Fadendichte reduziert wird.

10. Verfahren nach zumindest einem der Ansprüche 1, 2 oder 8, **dadurch gekennzeichnet, daß** die plastische Verformung mit einer Materialdickenreduzierung zum Schnittende hin verbunden ist, wobei die Fadendichte der Festigkeitsträger (3) in dem für eine Überlappung vorgesehenen Bereich bis zum Schnittende der Materialbahn hin reduziert wird.

11. Zusammengesetzte Materialbahn gefertigt nach zumindest einem der vorhergehenden Ansprüche, **dadurch gekennzeichnet, daß** sie für die Herstellung von Fahrzeugluftreifen verwendet wird.

## Claims

1. Method of joining the ends of a web of material (1), wherein reinforcing members (3), which extend substantially parallel to one another and transversely relative to the longitudinal direction of the web of material (1), are embedded in a rubber mixture (2), more especially for the production of tyre carcases, **characterised in that** at least one of the ends of the web of material (1), which are intended for the overlap, is subjected to a plastic deformation, which is associated with an increase in length, the filament density of the reinforcing members (3) being reduced in the plane of the web of material in the region intended for an overlap, and **in that** the deformation is substantially accomplished in the plane of the web of material (1).

2. Method according to claim 1, **characterised in that** both ends, which are intended for an overlap, are subjected to the deformation in the plane of the web of material (1).

3. Method according to claim 1 or 2, **characterised in that** at least one end of the web of material, when viewed with respect to the longitudinal direction, is inserted into a pressing tool (5) up to halfway along the width of the pressing tool, then compression is effected, and **in that**, because of this pressing operation perpendicularly relative to the plane of the web of material (1), the plastic deformation is effected in the plane of the web of material (1), thereby causing a simultaneous reduction in the filament density of the reinforcing members (3), and **in that** subsequently regions, which are thus produced, are used for the overlap during the joining process.

4. Method according to claim 1 or 2, **characterised in that**, prior to the cutting operation, the web of material is inserted into a pressing tool (7) with the region which is intended to be joined later, then compression is effected, and **in that**, because of this pressing operation perpendicularly relative to the plane of the web of material (1), the plastic deformation is effected in the plane of the web of material (1), thereby causing a simultaneous reduction in the filament density of the reinforcing members (3), and subsequently the web of material (1) is cut in the centre of the deformed region, and the deformed ends, which are thus produced and are to be joined, are disposed so as to overlap.

5. Method according to claim 2, **characterised in that** the ends of the web of material (1) are previously disposed so as to overlap on a hard base, and **in that** thereafter the plastic deformation is effected in the overlap region by an application of pressure by means of a moving roller (8).

6. Method according to at least one of the preceding claims, **characterised in that**, prior to the plastic deformation, a thin rubber strip is placed on at least one end of the web of material (1), and the end is at least partially covered by said strip, and **in that** this rubber strip is plastically deformed simultaneously with the end of the web of material (1).

7. Method according to claim 1 or 2, **characterised in that** the web of material (1) is plastically deformed prior to the cutting operation by stretching (9) without any pressing, and subsequently the region in the centre is cut, and the stretched ends to be joined are disposed so as to overlap.

8. Method according to at least one of the preceding claims, **characterised in that** the plastic deformation is accomplished at temperatures of 50 to 120° C, preferably 60 to 80° C.

9. Method according to at least one of the preceding claims, **characterised in that** the filament density of the reinforcing members (3) is reduced by the plastic deformation to approx. half the original filament density in the region of the ends of the web of material (1) which are intended for an overlap.

10. Method according to at least one of claims 1, 2 or 8, **characterised in that** the plastic deformation is associated with a reduction in the material thickness towards the cut end, the filament density of the reinforcing members (3) being reduced in the region, intended for an overlap, towards the cut end of the web of material.

11. Joined web of material manufactured according to at least one of the preceding claims, **characterised in that** it is used for the production of pneumatic vehicle tyres.

## Revendications

1. Procédé pour réunir les extrémités d'une bande de matériau (1), dans laquelle des éléments de renfort (3), qui sont essentiellement parallèles entre eux et s'étendent transversalement par rapport à la direction longitudinale de la bande de matériau (1), sont enrobés dans un mélange de caoutchouc (2), notamment pour la fabrication de carcasses de pneumatiques, **caractérisé en ce qu'**on soumet au moins l'une des extrémités, prévues pour être en chevauchement, de la bande de matériau (1), à une déformation plastique, à laquelle est lié un accroissement de longueur, la densité de fils de l'élément de renfort (3) dans le plan de la bande de matériau est réduite dans la zone prévue pour un chevauchement, et que la déformation est réalisée essentiellement dans le plan de la bande de matériau (1).

2. Procédé selon la revendication 1, **caractérisé en ce qu'**on soumet les deux extrémités de déformation, prévues pour un chevauchement, à la déformation dans le plan de la bande de matériau (1).

3. Procédé selon la revendication 1 ou 2, **caractérisé en ce qu'**on introduit au moins une extrémité de la bande de matériau, dans la direction longitudinale, dans un outil de compression (5), jusqu'à la moitié de la largeur de l'outil de compression, qu'on exécute ensuite une compression, et que sous l'effet de cette opération de compression perpendiculairement au plan de la bande de matériau (1) la déformation plastique se produit dans le plan de la bande de matériau (1) moyennant une réduction simultanée de la densité de fils de l'élément de renfort (3) et qu'ensuite, on utilise des portions ainsi fabriquées pour le chevauchement lors de l'assemblage.

4. Procédé selon la revendication 1 ou 2, **caractérisé en ce qu'**on introduit la bande de matériau avant l'opération de coupe, par la partie prévue pour un assemblage ultérieur, dans un outil de compression (7), qu'on exécute ensuite une compression et que sous l'effet de cette opération de compression perpendiculairement au plan de la bande de matériau (1) la déformation plastique se produit dans le plan de la bande de matériau (1) moyennant une réduction simultanée de la densité de fibres des éléments de renfort (3) et ensuite on découpe la bande de matériau (1) au centre de la partie déformée et on dispose les extrémités déformées ainsi obtenues en chevauchement pour l'assemblage.

5. Procédé selon la revendication 2, **caractérisé en ce qu'**on dispose préalablement en chevauchement les extrémités de la bande de matériau (1) sur un support dur, et qu'ensuite on exécute la déformation plastique dans la zone de chevauchement au moyen d'une charge de pression à l'aide d'un rouleau mobile (8).

6. Procédé selon au moins l'une des revendications précédentes, **caractérisé en ce qu'**on place une bande de caoutchouc mince avant la déformation plastique sur au moins une extrémité de la bande de matériau (1) et qu'on recouvre l'extrémité au moins en partie par cette bande, et qu'on déforme plastiquement cette bande de caoutchouc en même temps que l'extrémité de la bande de matériau (1).

7. Procédé selon la revendication 1 ou 2, **caractérisé en ce qu'**on déforme plastiquement la bande de matériau (1) avant l'opération de coupe, par étirage (9) sans compression et qu'on découpe ensuite la partie au centre et qu'on dispose les extrémités étirées en chevauchement pour l'assemblage.

8. Procédé selon au moins l'une des revendications précédentes, **caractérisé en ce que** la déformation plastique est réalisée à des températures allant de 50 à 120°C et de préférence de 60 à 80°C.

9. Procédé selon au moins l'une des revendications précédentes, **caractérisé en ce que** la densité de fils des éléments de renfort (3) est réduite dans la zone des extrémités de la bande de matériau (1) prévue pour un chevauchement, par déformation plastique approximativement à la moitié de la densité initiale des filtres.

10. Procédé selon au moins l'une des revendications 1, 2 ou 8, **caractérisé en ce que** la déformation plastique est liée à une réduction de l'épaisseur du matériau en direction de l'extrémité de coupe, la densité de fils des éléments de renfort (3) étant réduite dans la zone prévue pour un chevauchement, jusqu'à l'extrémité de coupe de la bande de matériau.

11. Bande de matériau assemblée réalisée selon au moins l'une des revendications précédentes, **caractérisée en ce qu'**elle est utilisée pour la fabrication de pneumatiques d'avions.
